# EUROPEAN PATENT SPECIFICATION

(11) **EP 2 570 166 B1**
(45) Date of publication and mention of the grant of the patent: **20.05.2020**
(21) Application number: 12184108.4
(22) Date of filing: 12.09.2012
(51) Int. Cl.: B01D 27/10, B01D 29/31, B01D 29/96, B01D 35/143, B01D 35/30

(54) **Water filter system with an electronic interface and method of installing a filter unit**
Wasserfiltersystem mit einer elektronischen Schnittstelle und Verfahren zur Installation einer Filtereinheit
Système de filtrage d'eau comportant une interface électronique et procédé d'installation d'une unité de filtre

(30) Priority: 15.09.2011 US 201113233309; 15.09.2011 US 201113233328; 15.09.2011 US 201113233347; 15.09.2011 US 201113233371; 15.09.2011 US 201113233390; 10.02.2012 US 201213371066; 15.09.2011 US 201113233410; 15.09.2011 US 201113233238
(43) Date of publication of application: 20.03.2013
(73) Proprietor: WHIRLPOOL CORPORATION, Benton Harbor Michigan 49022 (US)
(72) Inventor: Kruckenberg, Christopher A., 21025 Comerio (IT); Morrison, John W., 21025 Comerio (IT); Richmond, Peter J., 21025 Comerio (IT); Spindler, Jeffrey A., 21025 Comerio (IT)
(74) Representative: J A Kemp LLP

(56) References cited:
- WO-A1-01/34272
- DE-A1-102008 054 878
- GB-A- 2 346 568
- US-A- 4 915 831
- US-A1- 2006 060 512
- US-A1- 2010 064 646
- US-A1- 2011 147 297

## Description

### BACKGROUND OF THE PRESENT INVENTION

The present invention generally relates to a water filter system comprising a filter unit having a body portion adapted to be rotatingly received into a filter head assembly and an engagement protrusion or neck extending from the body portion and adapted for reception in a complementary receiver in the filter head assembly.

### SUMMARY OF THE INVENTION

A water filter system of the above type is disclosed by US2005/0252841. In this known filter assembly the neck or engagement protrusion is provided with two lugs defining a keyed engagement surface and a cam surface. When the filter unit has to be inserted in the filter head assembly, the rotation of the part of the head assembly acting as a water valve is totally driven by said lugs, therefore causing possible faults due to high transmitted forces. An example of a filter system wherein a filter having a non-cylindrical engagement protrusion is engaged with a filter head assembly is disclosed in DE 10 2008 054 878.

Another technical problem of the known filter systems is to provide a reliable and not expensive way for transmitting data of the filter unit to a central control unit, for instance data related to the life of the filter cartridge, which is limited by its contaminant holding capacity. A known system is disclosed by US2006/0060512 where fixed contact pins mounted on the filter head assembly are in electrical contact with one pair of contact pads mounted adjacent the proximal end of the filter unit. This known system is not reliable either because the contact surface is limited or because there is a sliding friction between contacts.

It is an object of the present invention to provide a water filter system without the above drawbacks.

In one aspect of the present invention there is provided a water filter system as set out in claim 1.

In another aspect of the present invention there is provided a method of installing a filter unit (10) as set out in claim 9.

In yet another aspect of the present invention, a water filter system includes a filter unit with an electronic device adapted for engagement with an electronic connector interface of a filter head assembly. An engagement protrusion extends from the body portion. The engagement protrusion has a cross-section with only one axis of symmetry. A side aperture is disposed on the engagement protrusion. An end aperture is disposed on the engagement protrusion.

These and other features, advantages, and objects of the present invention will be further understood and appreciated by those skilled in the art upon studying the following specification, claims, and appended drawings.

### BRIEF DESCRIPTION OF THE DRAWINGS

FIG. 1 is a top perspective view of one embodiment of a water filter system of the present invention;
FIG. 2 is a front perspective view of the water filter system of FIG. 1 with the water filter withdrawn from the filter head assembly;
FIG. 3 is a top perspective view of one embodiment of a water filter of the present invention;
FIG. 3A is an enlarged cross-sectional view of the water filter of FIG. 3 taken at IIIA-IIIA;
FIG. 4 is an elevational view of a first side of the water filter of FIG. 3;
FIG. 4A is an enlarged elevational view of a first side of a forward casing of the water filter of FIG. 3;
FIG. 4B is an enlarged elevational view of a first side of a forward casing of the water filter of FIG. 3;
FIG. 5 is a front elevational view of the water filter of FIG. 3 with casings;
FIG. 5A is an enlarged view of one embodiment of a laterally extending key member;
FIG. 5B is an enlarged view of another embodiment of a laterally extending key member;
FIG. 6 is an elevational view of a second side of the water filter of FIG. 3;
FIG. 6A is an enlarged elevational view of a second side of the forward casing of the water filter of FIG. 3;
FIG. 6B is an enlarged elevational view of a second side of another embodiment of a forward casing of the water filter of FIG. 3;
FIG. 7 is a rear elevational view of the water filter of FIG. 3;
FIG. 7A is an enlarged cross-sectional view of the water filter of FIG. 3 taken at VIIA-VIIA;
FIG. 8 is a top exploded perspective view of the water filter of FIG. 3;
FIG. 9 is a top plan view of the water filter of FIG. 3;
FIG. 9A is a top plan view of the water filter of FIG. 3;
FIG. 10 is a bottom plan view of the water filter of FIG. 3;
FIG. 11 is a top perspective view of one embodiment of a filter head assembly of the present invention;
FIG. 12 is a front elevational view of the filter head assembly of FIG. 11;
FIG. 13 is an elevational view of a first side of the filter head assembly of FIG. 11;
FIG. 14 is a rear elevational view of the filter head assembly of FIG. 11;
FIG. 15 is an elevational view of a second side of the filter head assembly of FIG. 11;
FIG. 16 is a bottom plan view of the filter head assembly of FIG. 11;
FIG. 17 is a top plan view of the filter head assembly of FIG. 11;
FIG. 17A is a top plan view of another embodiment of the filter head assembly of FIG. 11;
FIG. 18 is an exploded top perspective view of the filter head assembly of FIG. 11;
FIG. 19 is a bottom exploded perspective view of engaging components of the filter head assembly and filter unit;
FIG. 20A is an enlarged side perspective view of engaging components of the filter head assembly and filter unit prior to engagement;
FIG. 20B is a side elevational view of a filter unit prior to engagement with the filter head assembly illustrating the lateral engagement key member and key slot prior to engagement;
FIG. 20C is a side elevational view of the filter unit prior to engagement with the filter head assembly illustrating the first and second guides and the first and second engagement surfaces prior to engagement;
FIG. 20D is a cross-sectional view of the filter head assembly of FIG. 20B taken at XXD-XXD;
FIG. 20E is a cross-sectional view of the filter head assembly of FIG. 20C taken at XXE-XXE;
FIG. 20F is a partial cross-sectional view of the filter head assembly of FIG. 20C taken at XXF-XXF;
FIG. 20G is a side cross-sectional view of a filter unit prior to installation into a head assembly;
FIG. 21A is an enlarged side perspective view of engaging components of the filter head assembly and filter unit during engagement;
FIG. 21B is a side elevational view of a filter unit during engagement with the filter head assembly illustrating the lateral engagement key member and key slot engaging;
FIG. 21C is a side elevational view of the filter unit during engagement with the filter head assembly illustrating the first and second guides and engaging the first and second engagement surfaces engaging;
FIG. 21D is a cross-sectional view of the filter head assembly of FIG. 21B taken at XXID-XXID;
FIG. 21E is a cross-sectional view of the filter head assembly of FIG. 21C taken at XXIE-XXIE;
FIG. 21F is a partial cross-sectional view of the filter head assembly of FIG. 21C taken at XXIF-XXIF;
FIG. 22A is an enlarged side perspective view of engaging components of the filter head assembly and filter unit fully engaged;
FIG. 22B is a side elevational view of a filter unit in full engagement with the filter head assembly illustrating the lateral engagement key member and key slot fully engaged;
FIG. 22C is a side elevational view of the filter unit in full engagement with the filter head assembly illustrating the first and second guides and the first and second engagement surfaces fully engaged;
FIG. 22D is a cross-sectional view of the filter head assembly of FIG. 22B taken at XXIID-XXIID;
FIG. 22E is a cross-sectional view of the filter head assembly of FIG. 22C taken at XXIIE-XXIIE;
FIG. 22F is a partial cross-sectional view of the filter head assembly of FIG. 22C taken at XXIIF-XXIIF;
FIG. 23 is a front elevational view of the water filter system with the water filter fully installed into the filter head assembly;
FIG. 24 is an enlarged cross-sectional view of the water filter of FIG. 23 taken at XXIV-XXIV;
FIG. 25 is an enlarged cross-sectional view of the water filter of FIG. 17 taken at XXV-XXV; and
FIG. 26 is a side cross-sectional view of a filter unit fully installed into the filter head assembly.

### DETAILED DESCRIPTION OF EMBODIMENTS

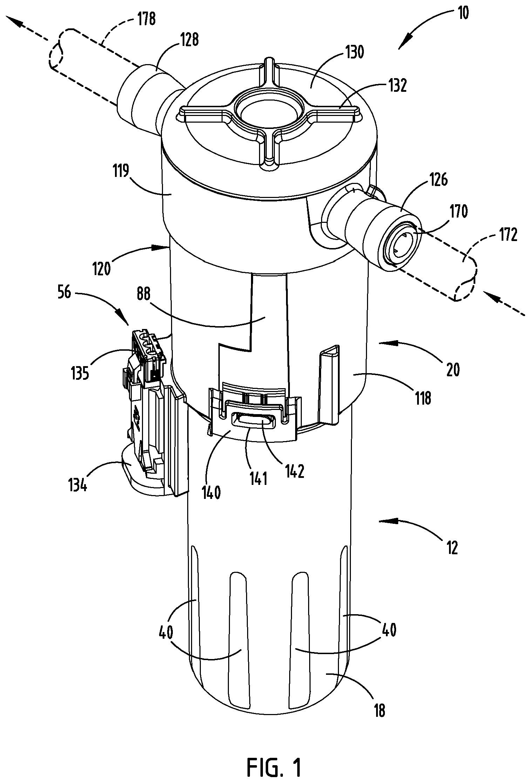

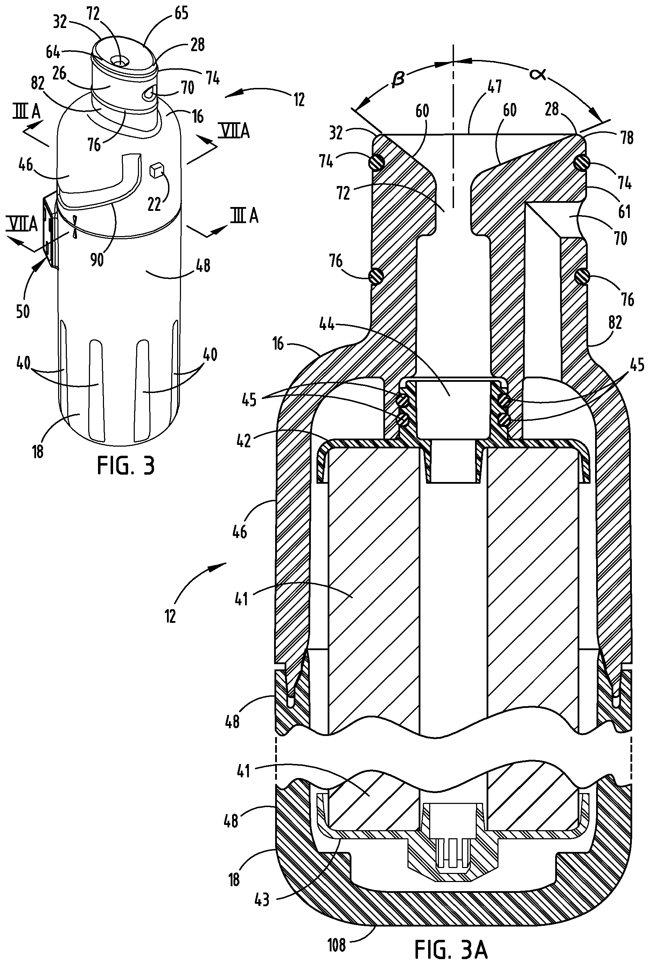

For purposes of description herein the terms "upper," "lower," "right," "left," "rear," "front," "vertical," "horizontal," and derivatives thereof shall relate to the invention as oriented in FIGS. 1 and 3. However, it is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

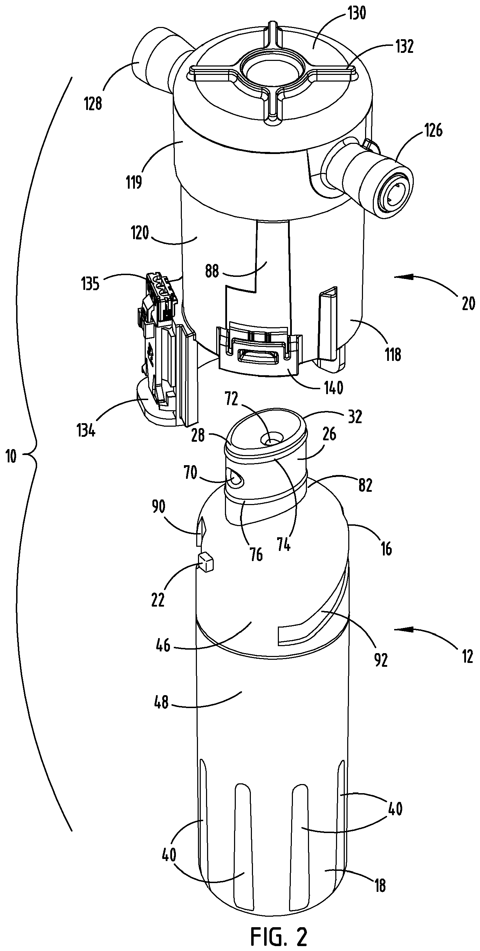

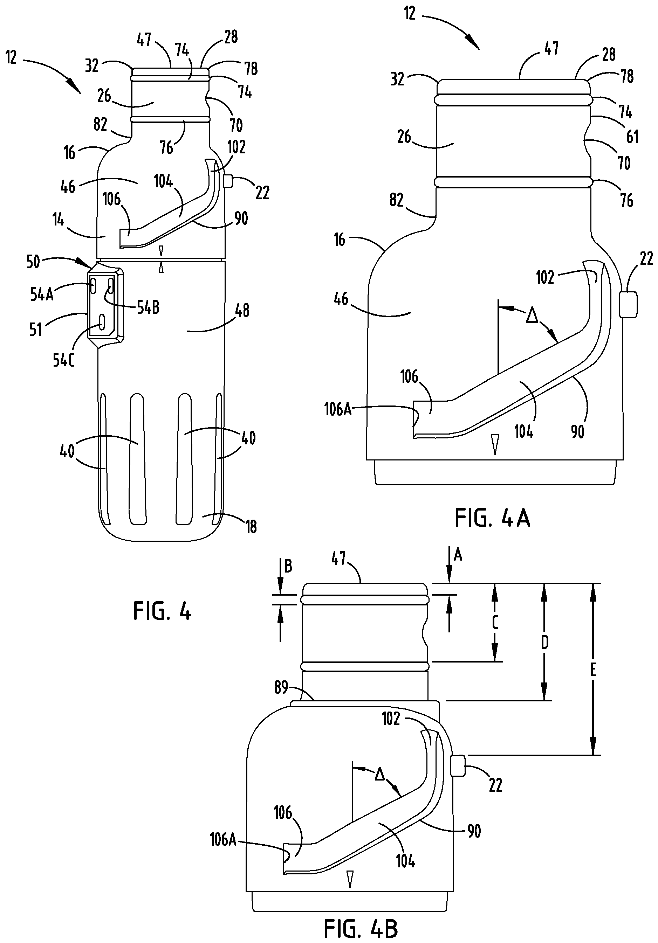

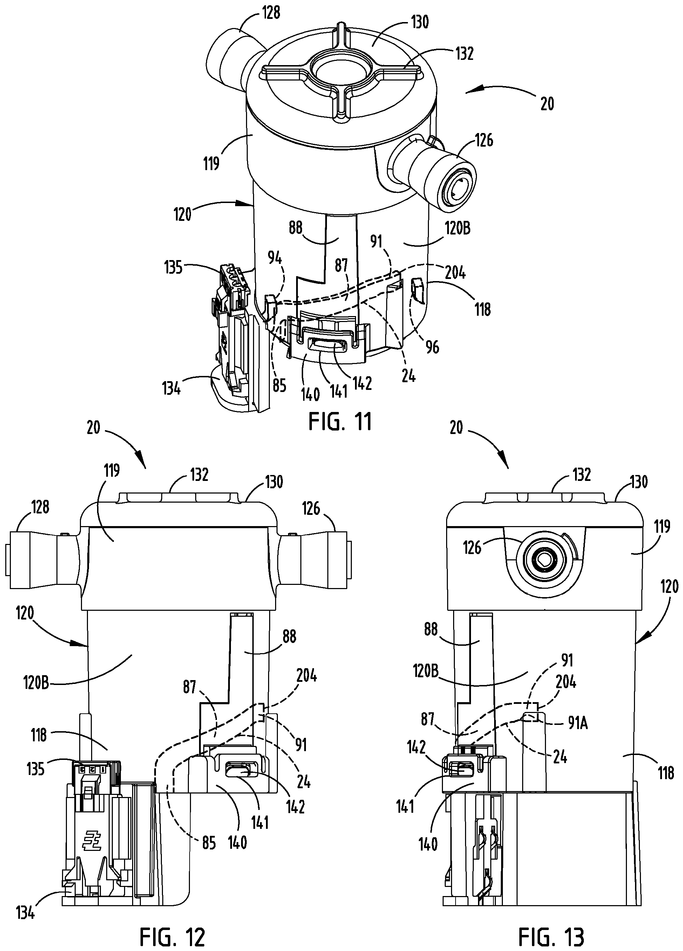

Referring to the embodiment illustrated in FIGS. 1 and 2, reference numeral 10 generally designates a water filter system including a filter unit 12 having a body portion 14 (FIG. 4) having a proximal end 16 and a distal end 18. The proximal end 16 is adapted to be inserted into a filter head assembly 20. A laterally extending key member 22 is disposed on the body portion 14 and adapted to engage a key slot 24 (FIG. 11) in the filter head assembly 20. An engagement protrusion 26 extends from the proximal end 16. The engagement protrusion 26 includes a first portion 28 having a first radius of curvature and a second portion 32 opposing the first portion 28 that includes a second radius of curvature that is larger than the first radius of curvature.

Referring now to FIGS. 3-4B, the body portion 14 of the filter unit 12 includes a cylinder-like construction having a diameter that is easily graspable by the hand of a user. A multitude of grasping cutouts 40 are disposed on the body portion 14 and extend toward the distal end 18 of the body portion 14 and are designed to provide a gripping surface for a user to both engage and disengage the filter unit 12 from the filter head assembly 20. As disclosed in further detail herein, engagement of the filter unit 12 typically includes rotational and longitudinal movement of the filter unit 12 relative to the filter head assembly 20. An internal portion of the filter unit 12 includes a water filter 39 having a filtering media 41 designed to filter and clean water that passes through the filter unit 12 during use. The filtering media 41 includes end caps 42, 43 that secure the filtering media 41 in place in the body portion 14 of the filter unit 12. The end cap 42 includes an outlet 44 that relays filtered water out of the filtering media 41 after the water has been filtered. Seals 45 prevent cross-contamination of unfiltered water with filtered water that has passed through the filtering media 41. As shown in FIG. 4B, the distance A from a distal protrusion surface 47 of the filter unit 12 to a first seal 74 is approximately 2.69 millimeters. The first seal 74 and a second seal 76 have a thickness B of approximately 2.62 millimeters. The distance C between the distal protrusion surface 47 and the second seal 76 is approximately 18.69 millimeters, while the distance D from the distal protrusion surface 47 to a shoulder support 89 is approximately 28.30 millimeters. Finally, the distance E from the distal protrusion surface 47 to the laterally extending key member 22 is approximately 41.20 millimeters. The dimensions noted above are specifically configured to complement and interact with the filter head assembly 20, thereby allowing for tight and secure engagement of the filter unit 12 with the filter head assembly 20.

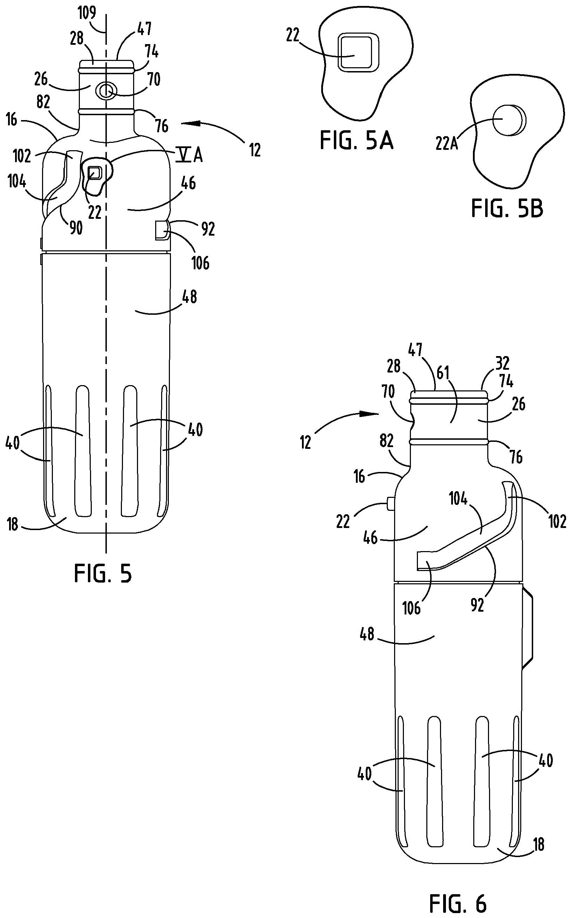

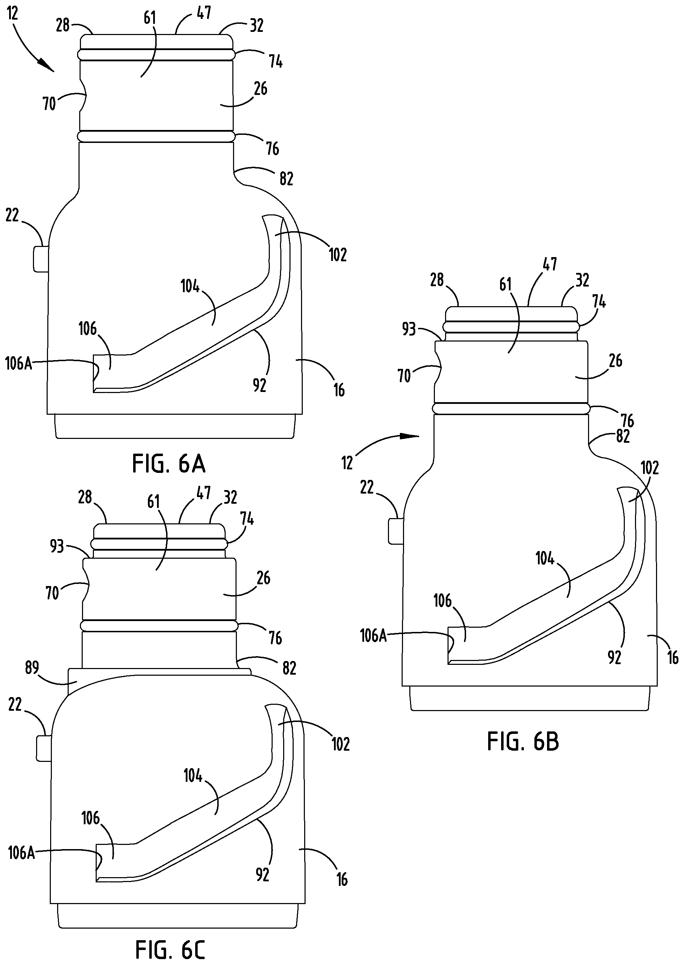

As readily observed in FIG. 5, the engagement protrusion 26 is centrally aligned as viewed from the front. However, as illustrated in FIG. 6, the engagement protrusion 26 is offset as viewed from the side. Thus, the engagement protrusion 26 is generally disposed in an offset position on the proximal end of the filter unit 12. Further, as evidenced in FIG. 5, the outlet 72 is generally aligned with a central longitudinal axis 109 that extends longitudinally through the center of the filter unit 12. The laterally extending key member 22 can be constructed in a variety of shapes. For example, the laterally extending key member can include a rectangular shape (FIG. 5A), a cylindrical shape (FIG. 5B), or any other shape adapted to interface with the key slot 24 of the filter head assembly 20. Regardless of the shape, the laterally extending key member 22 generally has a width of approximately 2.75 millimeters, a height of approximately 2.75 millimeters, and extends approximately 27.73 millimeters from the central longitudinal axis 109.

The body portion 14 of the filter unit 12 is defined by a forward casing 46 and a rearward casing 48 that are placed in abutting engagement over the water filter 39 disposed inside the filter unit 12. The forward casing 46 may be attached to the rearward casing 48 in any known manner, such as by heat staking, welding, or mechanical fastener attachment. Alternatively, it is contemplated that the body portion 14 could include one integral casing formed from a single part. The engagement protrusion 26 extends from the proximal end 16 of the filter unit 12 and is smaller in cross-sectional area than the body portion 14 of the filter unit 12. The body portion 14 tapers gradually from the proximal end 16 to the distal end 18.

The illustrated embodiment of FIGS. 3-7 depict an electronic device 50 that is disposed on and extends from an outer circumference of the body portion 14 between the proximal end 16 and the distal end 18 of the filter unit 12. In the illustrated embodiments, the electronic device 50 includes a protective cover 51 having a triangular-type cross-section with an apex 52 of the triangular-type cross-section extending away from the body portion 14 of the filter unit 12. The electronic device 50 includes a power contact 54A, a data contact 54B, and a ground contact 54C. The data contact 54B relays information pertaining to the filter unit 12 capacity, filter unit 12 usage data, and the number of days until a replacement filter unit 12 is needed. The ground contact 54C provides a conducting path to a grounding source, which is independent of the normal current-carrying path of the electronic device 50.

The electronic device 50 is used in conjunction with a smart filter system 56 that includes a smart filter board 58 that stores payload information values related to timeout intervals based on hours, minutes, and seconds. These values are used to determine how long a user interface waits for communication from the smart filter system 56 before triggering a replace filter icon. In addition, sync user functionality is used to trigger a configuration of the smart filter system 56. Reconfiguration of the smart filter system 56 may be used to ensure that the application control unit, user interface, and smart filter are all using the same values. This information is all stored in the smart filter board 58 on the electronic device 50.

The electronic device 50 may use gold plating, or other conductive metals, on the contacts 54A, 54B, and 54C. The gold plating ensures a good connection with an extremely low ampere circuit in a potentially moist environment. Connector grease, or an equivalent, may be used to help isolate the contacts 54A, 54B, and 54C and avoid shorting of the contacts 54A, 54B, and 54C due to moisture. In addition, the protective cover 51 is implemented to protect the smart filter board 58 after installation into the filter head assembly 20. This protective cover 51 also protects the grease prior to being installed into the filter head assembly 20, and provides electrostatic discharge (ESD) protection. As a result of the isolated low voltage application in the smart filter system 56, the electronic device 50 is safe during the installation of the filter unit 12 into the filter head assembly 20.

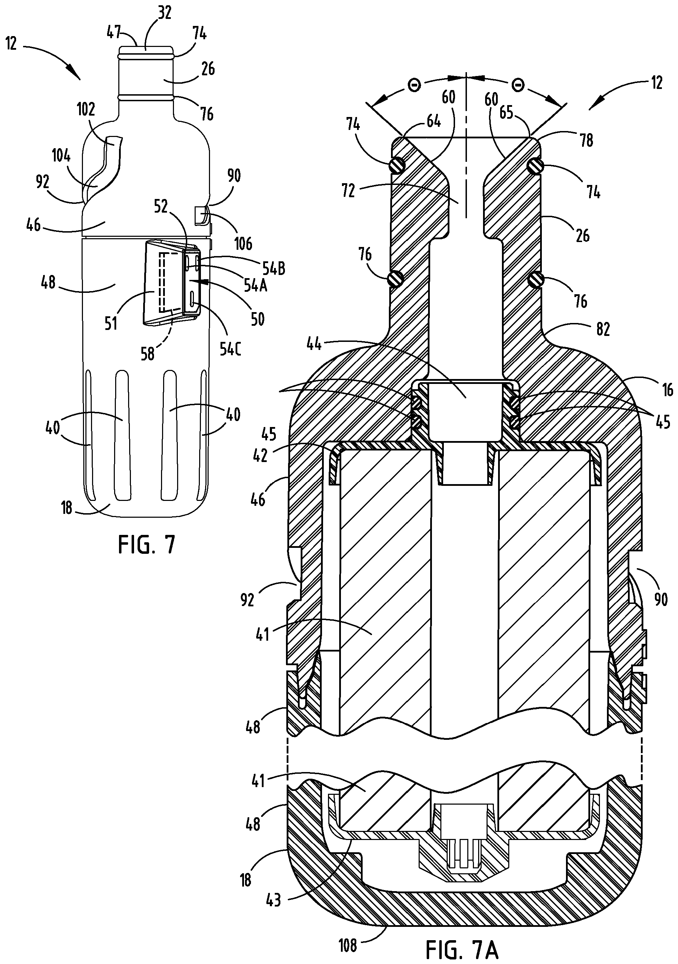

Referring to FIGS. 3A and 7A, an engagement or end wall 60 of the engagement protrusion 26 is integral with a sidewall 61 of the engagement protrusion 26 and has a concave construction that tapers downwardly to an end aperture, which constitutes an outlet 72 of the filter unit 12. A side aperture, which constitutes an inlet 70, is positioned in the sidewall 61 of the engagement protrusion 26. For purposes of description, as viewed in FIGS. 3A and 7A, the filter unit 12 is described in an upright position, wherein the longitudinal axis of the filter unit 12 is in a substantially vertical orientation. In the illustrated embodiment, an angle α of the engagement wall 60 adjacent to the first portion 28 has an angle approximately 67.7 degrees from vertical. It is contemplated that the angle α could be as low as 15 degrees or as high as 90 degrees. An angle β of the engagement wall 60 of the engagement protrusion 26 at the second portion 32 of the engagement protrusion 26 is approximately 51 degrees, although it is contemplated that the angle β could be as low as 5 degrees or as high as 85 degrees. It will be noted that the degrees and constructions of the engagement wall 60 may vary from these specified angles and still be within the scope of the present invention. As shown in FIG. 7A, the angle θ of the engagement wall 60 in the engagement protrusion 26 is approximately 46.9 degrees from vertical on both third and fourth portions 64, 65 of the engagement protrusion 26. It is contemplated that the angle θ could be as low as 10 degrees or as high as 85 degrees. As illustrated, the first and second portions 28, 32 of the engagement protrusion 26 are not symmetrical, while the third and fourth portions 64, 65 of the engagement protrusion 26 are generally symmetrical.

Referring again to the embodiments of FIGS. 3A and 7A, the inlet 70 and the outlet 72 of the filter unit 12 have approximately the same diameter to dissipate extreme water pressure increases or decreases in the system. Nevertheless, it is contemplated that the diameter size of the inlet 70 and the outlet 72 could differ. Additionally, the engagement protrusion 26 includes first and second seals 74, 76, wherein the first seal 74 is disposed above the inlet 70 near a forward edge 78 of the engagement protrusion 26, and the second seal 76 is disposed between the inlet 70 and a base portion 82 of the engagement protrusion 26. Both the first and second seals 74, 76 extend around the sidewall 61 of the engagement protrusion 26. The first seal 74 keeps incoming unfiltered water entering the inlet 70 from cross-contaminating with exiting filtered water leaving the outlet 72. Therefore, the first seal 74 acts as a barrier, keeping the water to be filtered separate from the filtered water. The second seal 76 acts as a barrier that prevents filtered water from leaking around the body portion 14 during use.

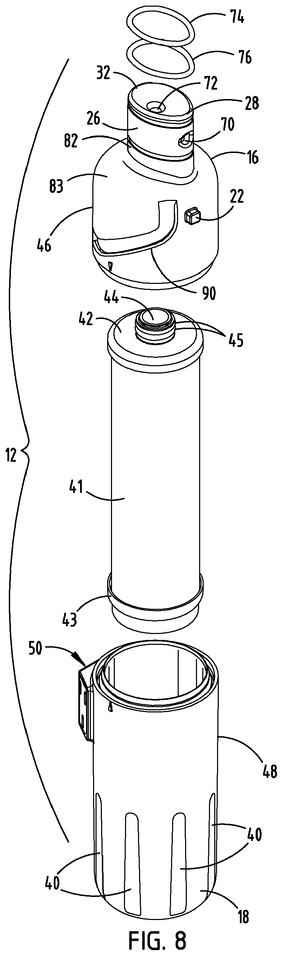

Referring now to FIGS. 4 and 6-7, a shoulder 83 (FIG. 8) on the proximal end 16 of the filter unit 12 includes the laterally extending key member 22, which is adapted to interface with and disengage an interference member 88 (FIG. 1) disposed in the filter head assembly 20, as outlined in further detail herein. The laterally extending key member 22, as illustrated, includes a square shape. The laterally extending key member 22 may extend out from the body portion 14 approximately 0.5 to 10 mm. In the illustrated embodiment, the laterally extending key member 22 extends out from the body portion 14 approximately 2.75 mm. However, it is contemplated that the shape of the laterally extending key member 22 could also be circular, oval, polygonal, etc. The laterally extending key member 22 includes a profile height that is adapted to be received in a key slot 24 inside the filter head assembly 20. The key slot 24 includes three segments that define the key slot 24 shape. A first segment 85 (FIG. 11) is substantially linear and parallel with the longitudinal extent of the filter head assembly 20. A second segment 87 (FIG. 11) extends at an angle between 0 degrees and 90 degrees relative to the longitudinal extent of the filter head assembly 20. A third segment 91 (FIG. 11) extends substantially laterally or normal to the longitudinal extent of the filter head assembly 20. The third segment 91 may angle back 0 degrees to 25 degrees to provide a detent-type configuration that is adapted to secure the laterally extending key member 22 in place in the key slot 24 of the filter head assembly 20. Additionally, as shown in FIG. 13, a retention nub 91A may be disposed in the third segment 91 to assist in securing the laterally extending key member 22 in place.

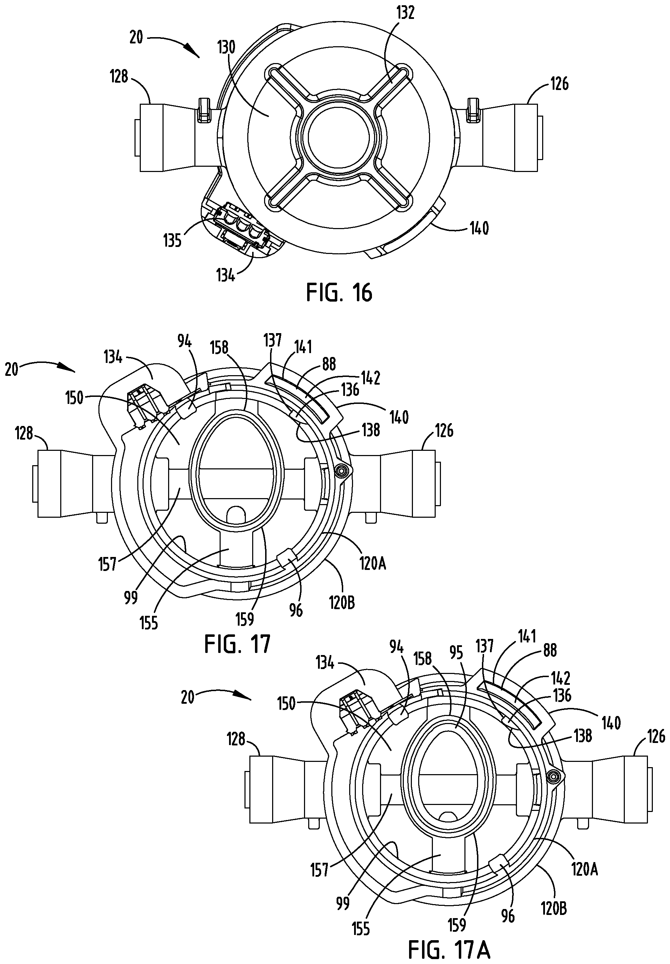

As shown in the illustrated embodiment of FIG. 6A, the engagement protrusion 26 may include a straight walled construction designed to engage the filter head assembly 20 and be received in a filter head sleeve 156. In an alternative embodiment, as illustrated in FIG. 6B, the engagement protrusion 26 includes a stepped construction including a ledge 93 adapted to interface with a complementary receiving ledge 95 (FIG. 17A) in the filter head assembly 20. This design ensures that the first and second seals 74, 76 disengage the filter head assembly 20 at the same time.

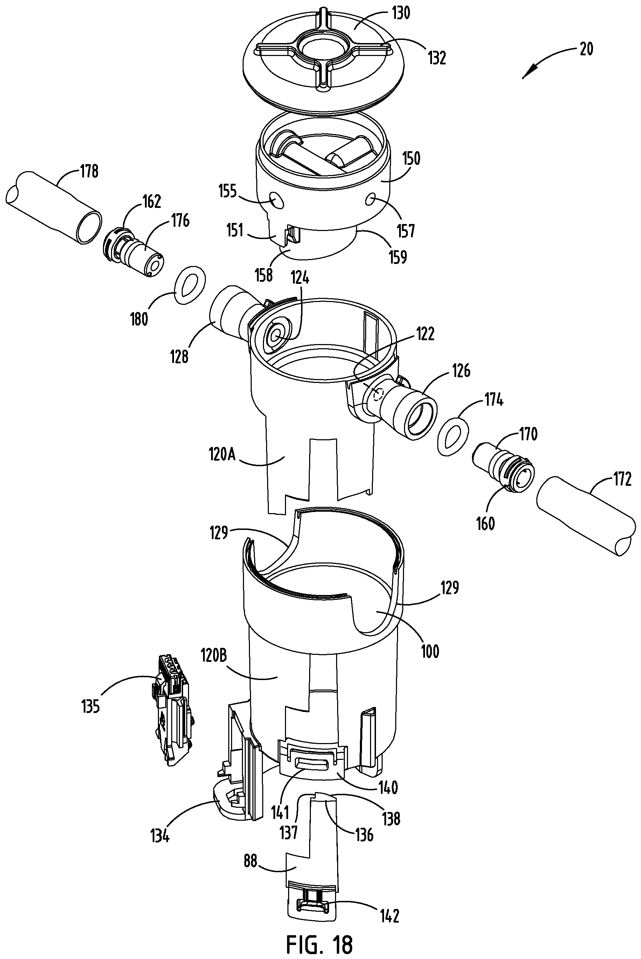

As shown generally in FIGS. 4-10, first and second engagement surfaces 90, 92 are disposed on the filter unit 12 on opposite sides thereof. The illustrated embodiment depicts the first and second engagement surfaces 90, 92 in the form of channeled grooves. However, it is contemplated that the first and second engagement surfaces 90, 92 could be formed from externally protruding walls, or a combination of grooves and externally protruding walls, among other possible constructions. The first and second engagement surfaces 90, 92 are adapted to engage first and second guides 94, 96 (FIG. 11), respectively, juxtapositioned on an interior wall 99 (FIG. 17) that defines a receiving cavity 100 (FIG. 18) of the filter head assembly 20. Similar to the laterally extending key member 22, the first and second engagement surfaces 90, 92 are shown having a square shape. However, it is contemplated that the square shape of the first and second engagement surfaces 90, 92 could also be circular, oval, polygonal, etc. Similar to the key slot 24, the first and second engagement surfaces 90, 92 include three segments. Specifically, each of the first and second engagement surfaces 90, 92 includes a first segment 102 that is substantially linear and parallel with the longitudinal extent of the body portion 14 of the filter unit 12. A second segment 104 of the first and second engagement surfaces 90, 92 extends at an angle between 0 degrees and 90 degrees relative to the longitudinal extent of the body portion 14 of the filter unit 12. In the illustrated embodiment, the angle Δ (FIG. 4A) of the second segment 104 of the first and second engagement surfaces 90, 92 is 62 degrees from vertical. A third segment 106 of the first and second engagement surfaces 90, 92 extends substantially laterally or normal to the longitudinal extent of the body portion 14 of the filter unit 12. Alternatively, the third segment 106 may angle back 0 degrees to 25 degrees to provide a detent-type configuration that is adapted to secure the first and second guides 94, 96 in place after engagement of the filter unit 12 with the filter head assembly 20. Each of the first, second, and third segments 102, 104, and 106 of the first and second engagement surfaces 90, 92 provide a smooth engagement of the filter unit 12 with the filter head assembly 20 during installation of the filter unit 12, as discussed in further detail herein.

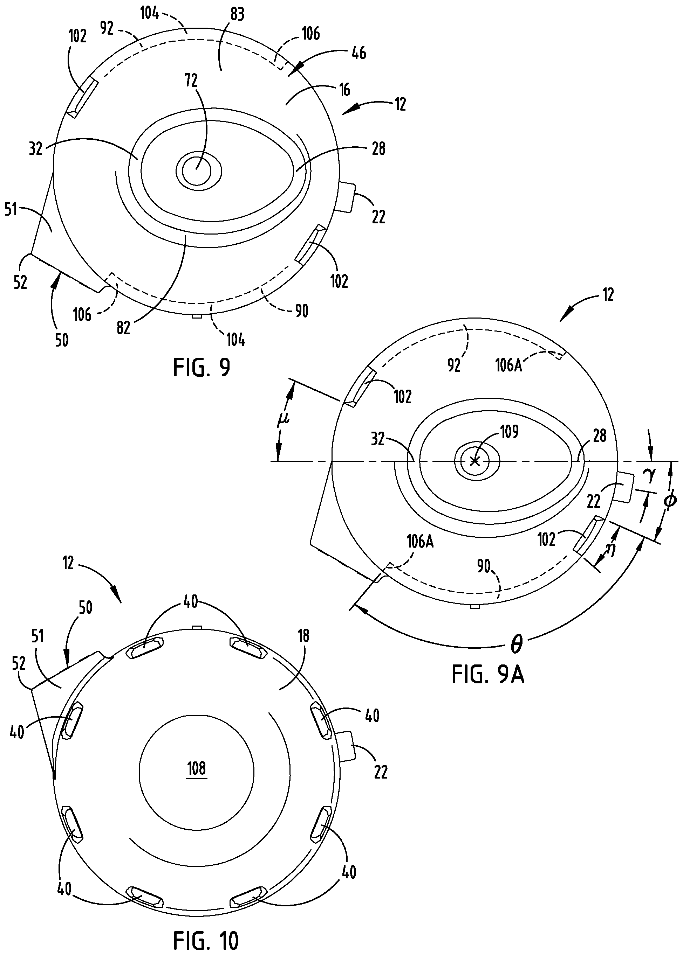

As shown in FIG. 9, the first portion 28 of the engagement protrusion 26 has a first radius of curvature. The second portion 32 of the engagement protrusion 26 opposes the first portion 28 and has a second radius of curvature that is larger than the first radius of curvature. Thus, a cross-section of the engagement protrusion 26 taken perpendicular to the longitudinal extent of the filter unit 12 is generally egg-shaped. Of course other shapes can be used as well (for instance an oval cross section), with the common object of reaching a shape coupling between the engagement protrusion and the rotating part of the filter head assembly. Stated differently, the engagement protrusion 26 includes a cross-section with only one axis of symmetry. Further, the laterally extending key member 22 is not aligned with, but instead is generally offset from, the inlet 70 of the engagement protrusion 26. The shoulder 83 of the filter unit 12 is generally rounded. However, the shoulder 83 can also be angled or have a more square construction. Alternatively, the shoulder 83 may include the shoulder support 89 that bears against the filter head sleeve 156. As shown in FIG. 10, the distal end 18 of the filter unit 12 is also generally rounded, but could include other constructions. A substantially planar portion 108 (FIG. 7A) is disposed at the distal end 18 of the filter unit 12, and allows the filter unit 12 to be placed in an upright position.

Referring to FIG. 9A, the outlet 72 of the filter unit 12 is approximately centered or aligned with a central longitudinal axis 109 (FIG. 5) that extends centrally through the filter unit 12. A line from the central axis to the first portion 28 of the engagement protrusion 26 is generally defined to be at an angle of zero degrees. The laterally extending key member 22 is offset at an angle γ approximately 10 degrees from the first portion 28 of the engagement protrusion 26. The angle Φ between the first portion 28 to the first segment 102 of the first engagement surface 90 is approximately 26 degrees. The first segment 102 includes an opening that extends across an angle η that is approximately 15 degrees of the shoulder 83 of the filter unit 12. The first engagement surface 90 extends across an angle θ that is approximately 104 degrees from the opening of the first segment 102 to an abutment wall 106A adjacent the third segment 106. The first segment 102 of the first engagement surface 90 is approximately 180 degrees from the first engagement surface 90 of the second engagement surface 92. The angle µ taken from a line defined between the central longitudinal axis 109 to the second portion 32 is also 26 degrees. Thus, the angle between a line defined between the central longitudinal axis 109 and the first portion 28 to the first segment 102 of the second engagement surface 92 is 206 degrees (180 degrees plus 26 degrees).

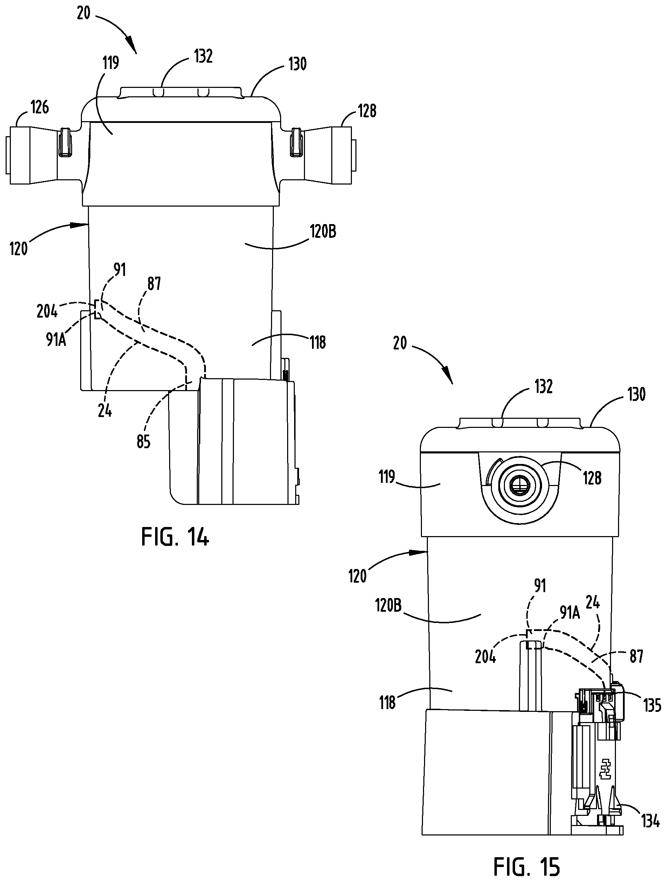

Referring now to FIGS. 11-16, the filter head assembly 20 includes a filter unit receiving end 118 and a water receiving end 119. The filter head assembly 20 has a cylindrical receiver 120 that is defined by an interior wall portion 120A (FIG. 17) and an exterior wall portion 120B. The cylindrical receiver 120 is adapted to receive all or at least a portion of the proximal end 16 of the filter unit 12. An external circumference of the interior wall portion 120A includes an inlet port 122 (FIG. 18) and an outlet port 124 (FIG. 18) defined by opposing inlet and outlet extension members 126, 128, respectively. The inlet extension member 126 defines an inlet aperture 126A. In the illustrated embodiment, the inlet aperture 126A is 0.3125 inches. The outlet extension member 128 defines an outlet aperture 128A. In the illustrated embodiment, the outlet aperture 128A is 0.25 inches. The exterior wall portion 120B includes wall slots 129 (FIG. 18) that are sized to generally accommodate the inlet and outlet extension members 126, 128. Although the inlet and outlet extension members 126, 128 are shown on opposite sides of the filter head assembly 20, it is contemplated that the inlet and outlet extension members 126, 128 could be at any angle relative to one another and disposed at any position on the external circumference of the interior wall portion 120A. The cylindrical receiver 120 includes an end wall 130 positioned on the cylindrical receiver 120 proximate the water receiving end 119. Structural supports 132 (FIG. 16) are disposed on an external surface of the end wall 130. An electronic connector extends from an edge of the cylindrical sidewall 132 of the filter head assembly 20 and is adapted for engagement with the electronic device 50 on the filter unit 12. Additionally, a clip 134 is positioned on the exterior circumference of the filter head assembly 20 and is designed to support an electronic connector 135 on the filter head assembly 20. The electronic connector 135 is designed to receive information from and communicate information to the electronic device 50. The electronic connector 135 is removably connected with the clip 134, such as by a snap-fit connection, with the clip 134. Thus, the electronic connector 135 can be removed and replaced, if necessary.

Referring again to FIGS. 11-15, the key slot 24 is formed on an interior side of the exterior wall portion 120B. The key slot 24, as mentioned herein, is designed to receive the laterally extending key member 22 when the filter unit 12 is being inserted into the filter head assembly 20. In addition, the interference member 88 forms a portion of the exterior wall portion 120B, and is designed to prevent a filter unit that lacks a laterally extending key member from engaging the filter head assembly 20. The interference member 88 includes an abutment catch 136 (FIG. 17) disposed at a distal end of the interference member 88 at an interior side of the interference member 88. The abutment catch 136 includes an abutment wall 137 (FIG. 17) and a sloped wall 138. The interference member 88 is connected to the exterior wall portion 120B proximate the filter unit receiving end 118. A portion of the key slot 24 extends along an interior side of the interference member 88. As illustrated, the interference member 88 is connected with the exterior wall portion 120B by a securing clip 140 (FIG. 18). The securing clip 140 includes an aperture 141 (FIG. 18) adapted to receive a clip protuberance 142 (FIG. 18) disposed on the interference member 88. However, it is contemplated that the interference member 88 could be connected in other manners, such as by a living hinge, adhesive, mechanical fasteners, etc.

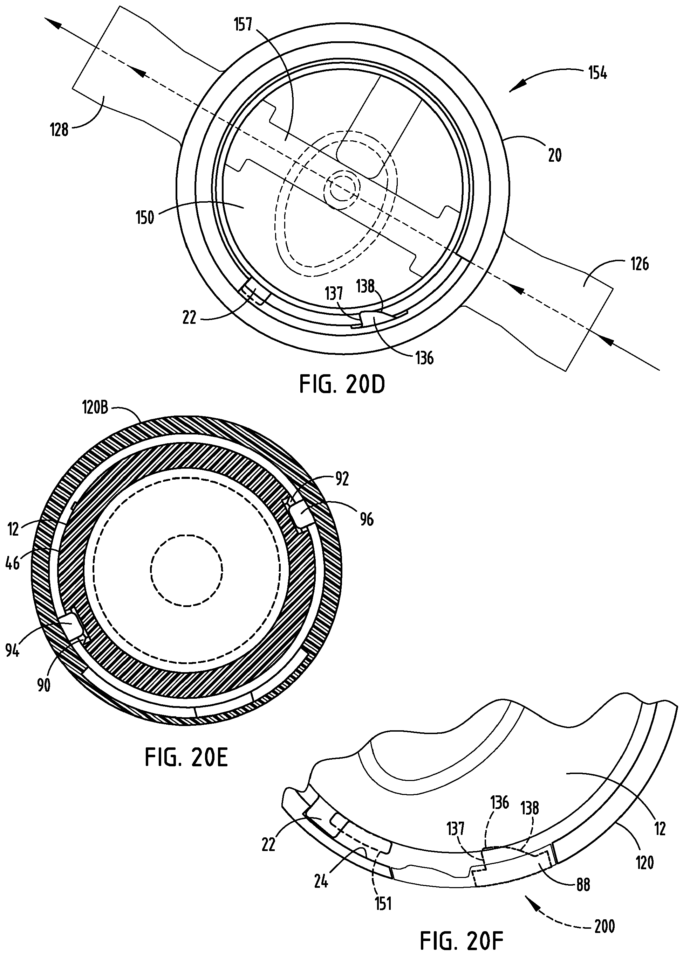

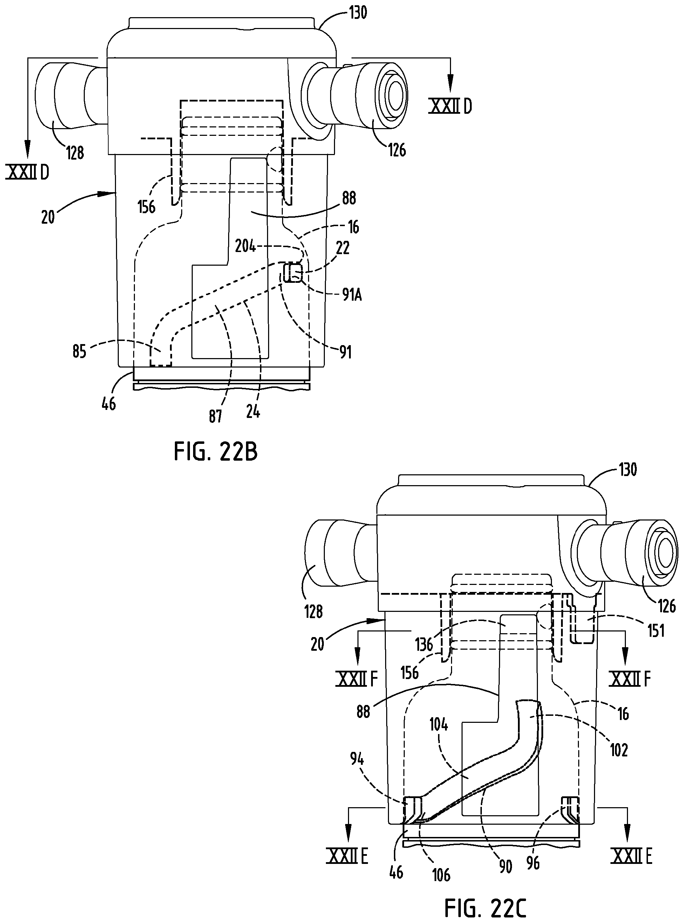

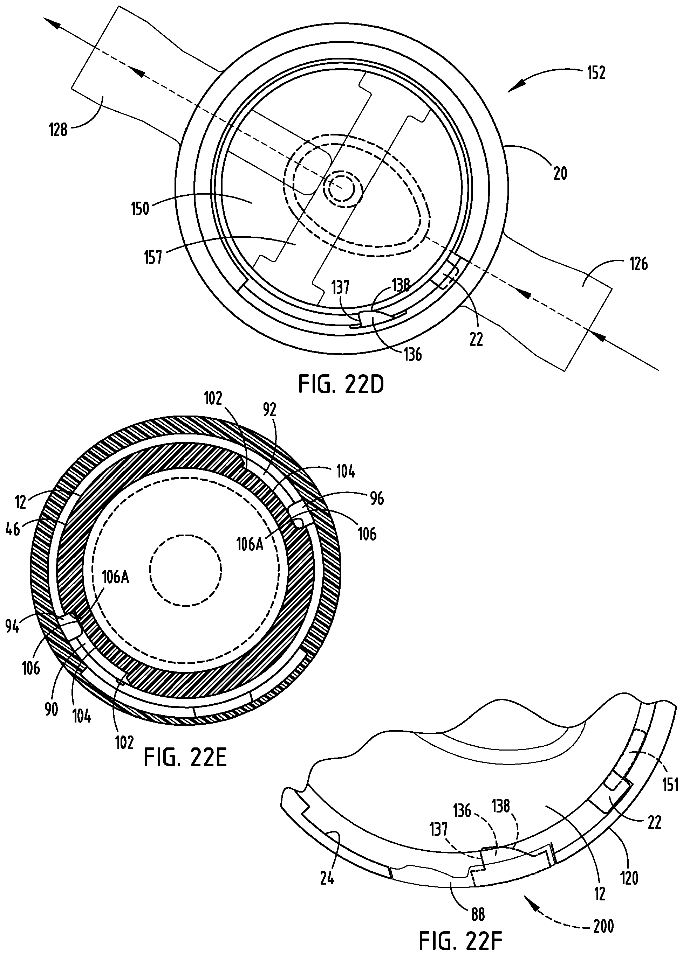

Turning now to FIGS. 17-19, the filter head assembly 20 also includes a filter receiver 150 with a stop member 151. The filter receiver 150 is rotatable inside the filter head assembly 20 between a filtering position 152 (FIG. 22D) and a bypass position 154 (FIG. 20D), wherein unfiltered water passes through the filter head assembly 20 when the filter unit 12 is not installed. The filter head assembly 20 also includes the filter head sleeve 156, which has a cross-section that complements the shape of the engagement protrusion 26. Generally stated, the cross-section of the filter head sleeve 156 is egg-shaped. More specifically, the filter head sleeve 156 includes a first portion 158 that includes a first radius of curvature and a second portion 159 opposing the first portion 158 that includes a second radius of curvature that is larger than the first radius of curvature. Thus, the filter head sleeve 156 includes a cross-section with only one axis of symmetry. The filter head sleeve 156 is sized slightly larger than the engagement protrusion 26 such that the filter head sleeve 156 can closely receive and retain the engagement protrusion 26 and maintain a watertight seal with the aid of the first and second seals 74, 76.

In an alternative embodiment, as illustrated in FIG. 17A, the filter head sleeve 156 may include the stepped construction briefly mentioned above with reference to FIG. 6A, such that the filter head sleeve 156 includes the receiving ledge 95, which is adapted to engage and abut the ledge 93 on the engagement protrusion 26. During insertion, the stepped construction of both the filter head sleeve 156 and the engagement protrusion 26 allows the first and second seals 74, 76 to engage the filter head sleeve 156 simultaneously. Similarly, during removal, the stepped construction allows the first and second seals 74, 76 to disengage the filter head sleeve 156 simultaneously.

Referring again to FIGS. 17-19, the filter receiver 150 includes a filtering pathway 155 and a bypass channel 157. The bypass channel 157 allows water to flow through the filter head assembly 20 without being filtered. The filter head sleeve 156 of the filter receiver 150 is disposed inside the filter head assembly 20. The inlet and outlet apertures 126, 128 include couplings 160, 162 adapted to interface with an inlet water conduit 172 and an outlet water conduit 178, respectively. The coupling 160 includes an insert 170 that connects with the inlet aperture 126. The insert 170 is sealed by a gasket 174. The coupling 162 includes an insert 176 that connects with the outlet aperture 128. The insert 176 is sealed by a gasket 180. The gaskets 174, 180 of the inlet and outlet apertures 126, 128, respectively, keep water from leaking out of the inlet and outlet apertures 126, 128.

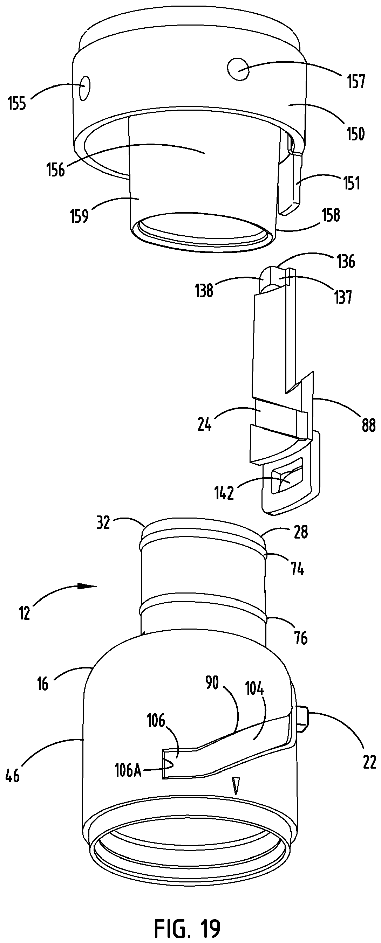

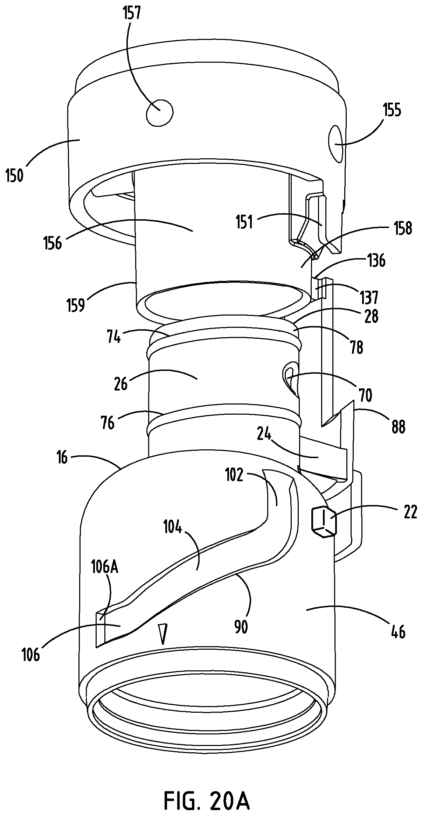

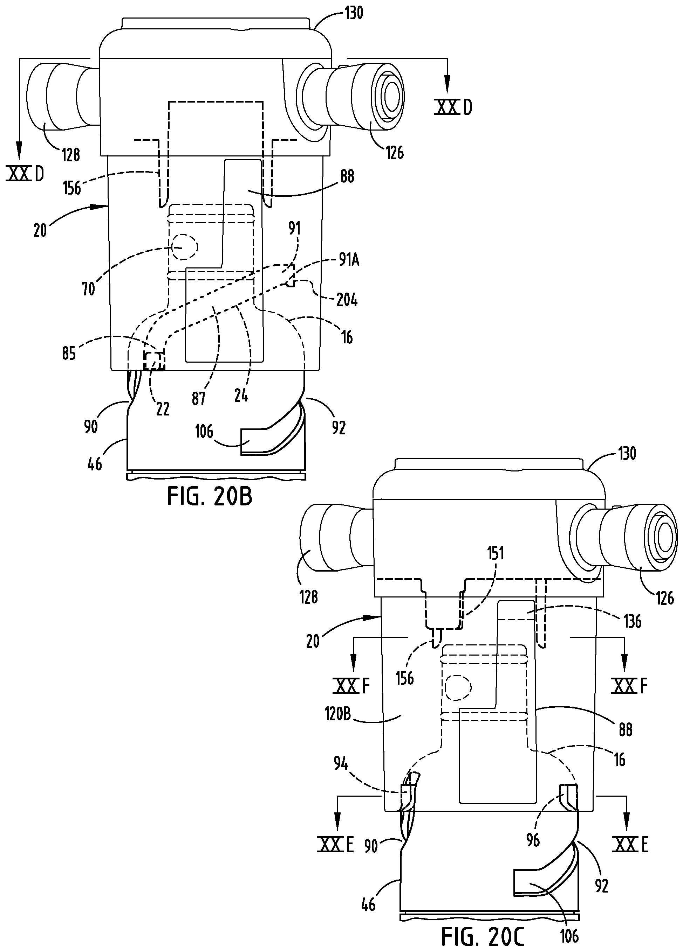

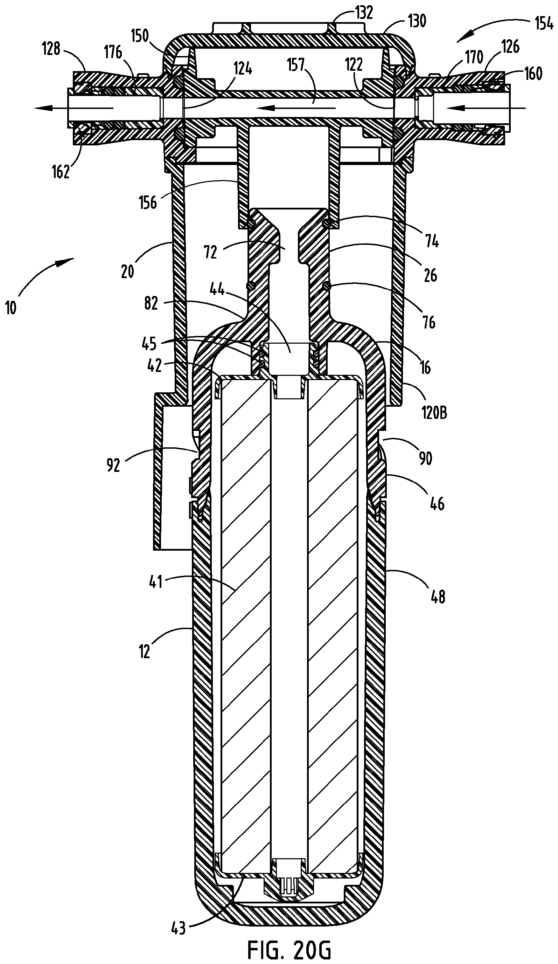

Referring to FIGS. 19 and 20A, during installation of the filter unit 12 with the filter head assembly 20, the filter unit 12 is oriented such that the engagement protrusion 26 is aligned with the filter receiver 150 and specifically aligned with the filter head sleeve 156, which includes an egg-shaped cross-section that complements the egg-shaped cross-section of the engagement protrusion 26, as outlined herein. Alignment of the engagement protrusion 26 with the filter head sleeve 156 results in alignment of the laterally extending key member 22 with the key slot 24, as well as alignment of the first and second guides 94, 96 with the first and second engagement surfaces 90, 92, as shown in FIGS. 20B, 20C, and 20E. In this position, the abutment catch 136 on the interference member 88 is in an interference position 200, as shown in FIGS. 20D and 20F. In addition, the engagement protrusion 26 is in only slight engagement with the filter head sleeve 156 of the filter receiver 150, as shown in FIG. 20G.

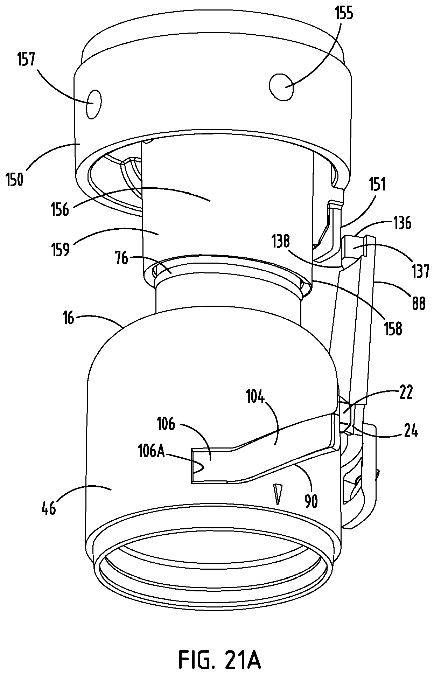

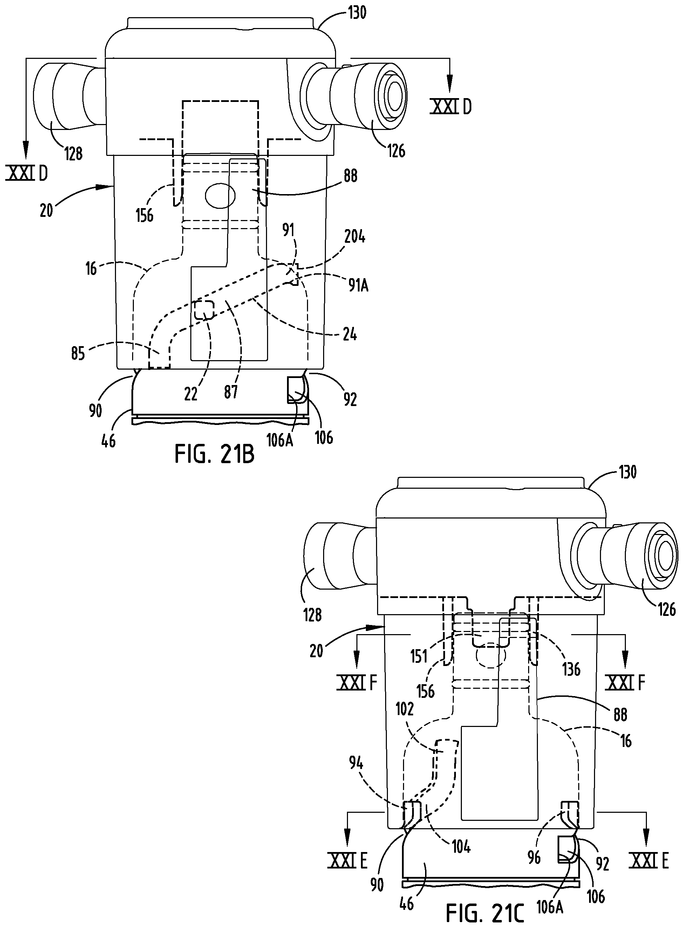

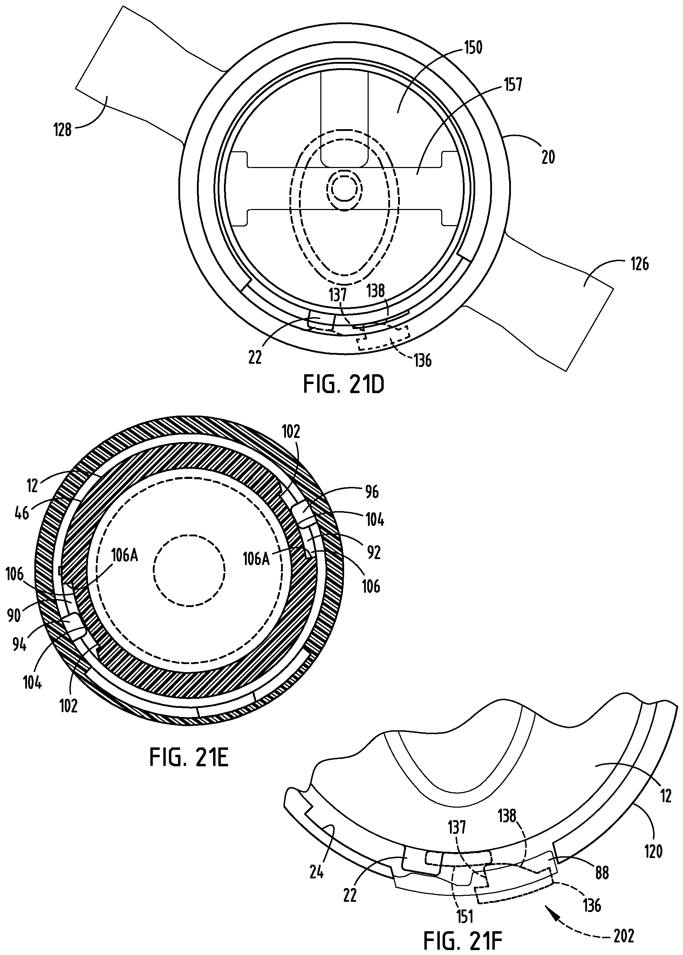

Referring now to FIGS. 21A-21C, linear movement of the filter unit 12 into the filter head assembly 20 generally occurs until the laterally extending key member 22 begins to transition from the first segment 85 into the second segment 87 of the key slot 24. At the same time, the first and second guides 94, 96 are transitioning from the first segment 102 of the first and second engagement surfaces 90, 92, respectively, into the second segment 104 of the first and second engagement surfaces 90, 92, respectively. As the laterally extending key member 22 transitions into the second segment 87 and the first and second guide members 94, 96 transition into the second segment 104 of the first and second engagement surfaces 90, 92, the filter unit 12 begins to rotate clockwise into the filter head assembly 20. Because the second segment 87 of the key slot 24 is at an angle relative to the longitudinal extent of the filter head assembly 20, and also because the second segment 104 of the first and second engagement surfaces 90, 92 is at the same general angle as the second segment 87 of the key slot 24, the filter unit 12 begins to draw into the filter head assembly 20, as shown in FIGS. 21B and 21C. At the same time, the engagement protrusion 26 has engaged and is partially inserted into the filter head sleeve 156. Because the filter unit 12 is rotating into the filter head assembly 20, the engagement protrusion 26 subsequently rotates the filter head sleeve 156 and the filter receiver 150 as the filter unit 12 is drawn into the filter head assembly 20 (FIGS. 21D and 21E).

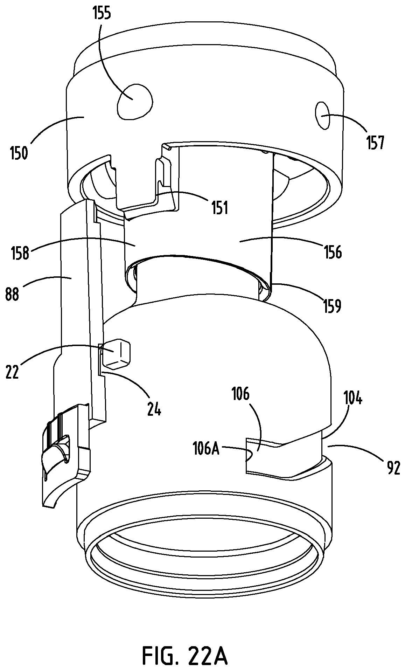

As shown in FIGS. 21A, 21B, and 21F, as the laterally extending key member 22 passes through the second segment 87 of the key slot 24, the laterally extending key member 22 passes by the interference member 88. As the laterally extending key member 22 passes by the interference member 88, the laterally extending key member 22 abuts the interference member 88 and forces the interference member 88 outward, thereby moving the abutment wall 137 on the abutment catch 136 from the interference position 200 to a non-interference position 202. When the interference member 88, and consequently the abutment wall 137 on the abutment catch 136, is moved to the non-interference position 202, the stop member 151 disposed on the filter receiver 150 is free to rotate past the interference member 88, and consequently the abutment catch 136. Absent the laterally extending key member 22, which abuts the interference member 88 and forces it outward, the abutment wall 137 on the abutment catch 136 would remain in the interference position 200, thereby preventing the stop member 151 on the filter receiver 150 from rotating past the interference member 88. Consequently, the filter unit 12 would be unable to move from the bypass position 154 (FIGS. 20A-20G) to the filtering position 152 (FIGS. 22A-22G).

Referring now to FIGS. 22A-22D, after the stop member 151 has cleared the abutment catch 136 on the interference member 88, the laterally extending key member 22 moves past the interference member 88 and begins to transition into the third segment 91 of the key slot 24. At the same time, the first and second guides 94, 96 transition into the third segment 106 of the first and second engagement surfaces 90, 92. As the laterally extending key member 22 engages a stop wall 204 in the key slot 24, the first and second guides 94, 96 engage the abutment wall 106A (FIGS. 22E and 22F) in the third segment 106 of the first and second engagement surfaces 90, 92. The retention nub 91A assists in securing the laterally extending key member 22 against the stop wall 204 of the key slot 24.

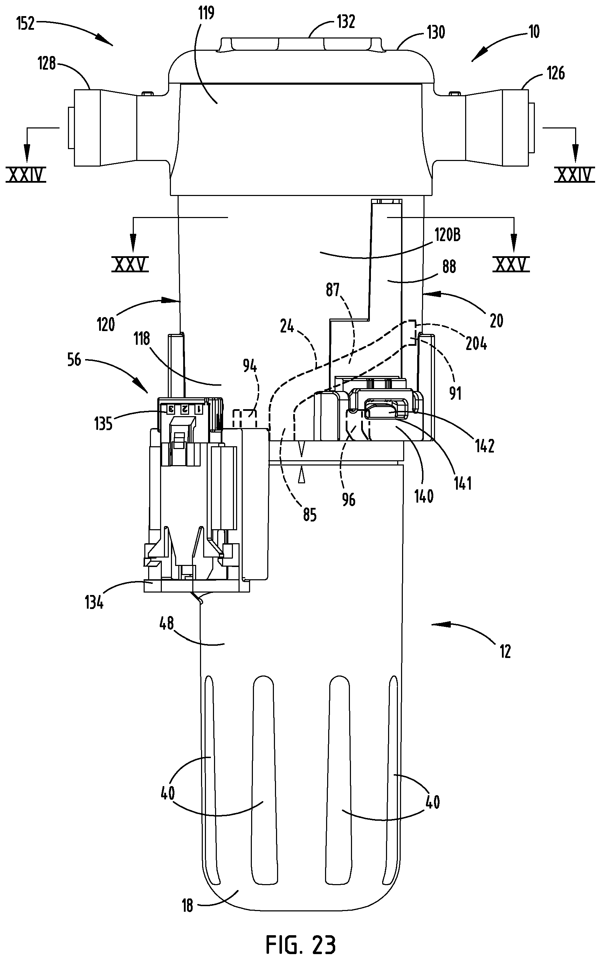

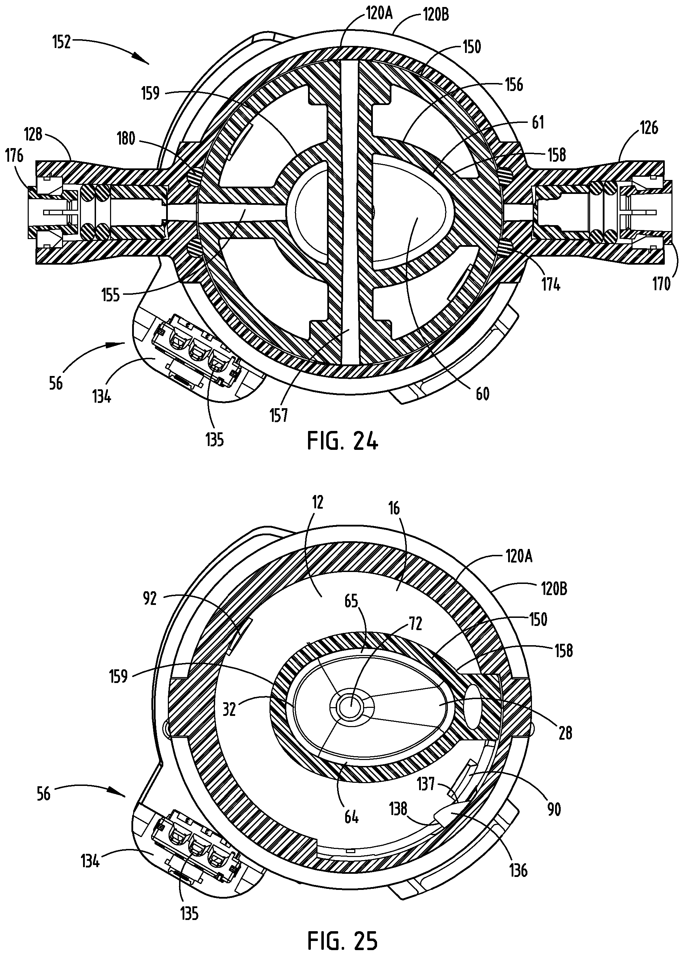

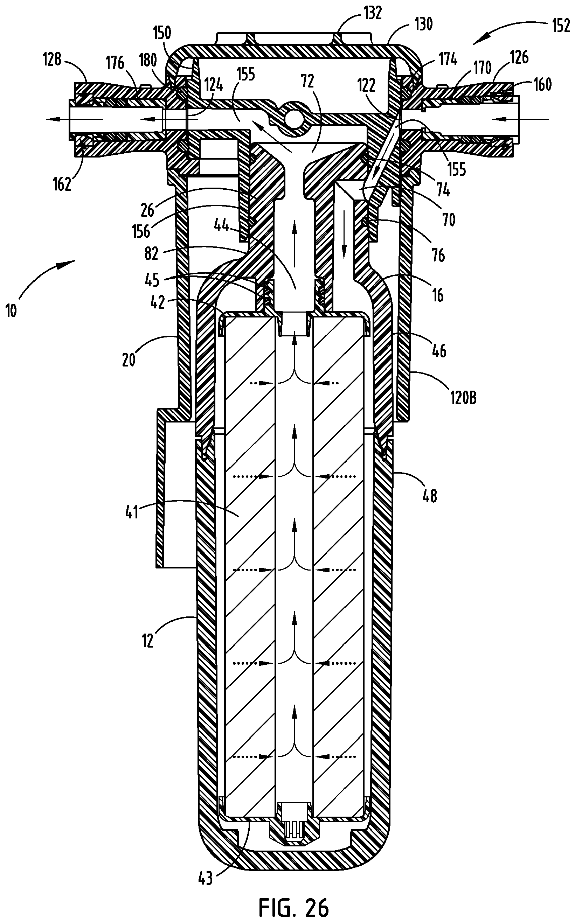

As shown in FIGS. 23-26, the filter unit 12 is now fully inserted into the filter head assembly 20 and the bypass channel 157 has been fully rotated out of alignment with the inlet extension member 126 and the outlet extension member 128. Consequently, water that flows into the filtering pathway 155 flows into the filter unit 12 through the inlet 70 through the sidewall 61 and into the water filter 39. The water then passes through the filtering media 41 and into a central column of the filter unit 12, where the water flows past the outlet 44 of the water filter 39 into the outlet 72 of the filter unit 12. The filtered water then passes into the filtered water pathway 155 of the filter receiver 150 and exits out the outlet aperture 128 to a water line. The water line then relays the filtered water to a dispenser, where it is available for consumption by a user.

When the filter unit 12 is to be replaced, the filter unit 12 is rotated counterclockwise and the reverse steps disclosed above are conducted. Notably, the laterally extending key member 22 does not move the interference member 88 out of the interference position 200 for the stop member 151 during removal. This step is unnecessary as the stop member 151 engages the sloped wall 138 of the abutment catch 136. Consequently, as a result of the sloped wall 138 construction, the stop member 151 is able to force the interference member 88 to the non-interference position 202 without the assistance of the laterally extending key member 22. The filter unit 12 is then rotated counterclockwise until the filter unit 12 can be withdrawn in a linear motion from the filter head assembly 20.

In the illustrated embodiment, the water filter system 10 is adapted to receive a filter unit 12, which is fully inserted by a quarter turn installation. It is contemplated that the lengths of the segments of the first and second engagement surfaces 90, 92, as well as the lengths of the first, second, and third segments 85, 87, and 91 of the key slot 24 may vary such that the turning radius may be greater than or less than one quarter turn of the filter unit 12 relative to the filter head assembly 20.

It will be understood by one having ordinary skill in the art that the water filter system 10, as described herein, can be used in a variety of appliances, such as refrigerators, dishwashers, and clothes washers and dryers. Further, it will be understood that the water filter system 10 can be used for a variety of applications, such as a second stage water filter for a dishwater, a water steam filter for an oven, and a water cleaning filter for consumption by a user out of a refrigerator. These are examples only and are not meant to be limiting.

The above description is considered that of the illustrated embodiments only.

## Claims

1. A water filter system comprising:
a filter head assembly (20);
a filter unit (12) having a body portion (14) adapted to be rotatingly received into said filter head assembly (20);
an engagement protrusion (26) extending from the body portion (14) and adapted for reception in the filter head assembly (20), **characterized in that** the engagement protrusion (26) presents a peripheral wall including a cross section that defines an outer perimeter with a first portion (28) having a first radius of curvature and an opposing second portion (32) having a second radius of curvature that is larger than the first radius of curvature, wherein the outer perimeter at the cross section of the engagement protrusion (26) is substantially egg-shaped and has a single axis of symmetry; and
first and second engagement surfaces (90, 92) traversing at least part of the body portion (14) and at least a laterally extending key member (22) disposed on the body portion (14) between the first engagement surface (90) and the second engagement surface (92), the laterally extending key member (22) being adapted to reposition an interference member (88) of the filter head assembly (20) from an interference position, whereby the body portion (14) cannot be fully inserted into the filter head assembly (20), to a non-interference position, whereby the body portion (14) can be fully inserted into the filter head assembly (20);
wherein the laterally extending key member is offset from an inlet (70) of the engagement protrusion (26), wherein the inlet (70) is positioned in the peripheral wall;
wherein the filter head assembly (20) comprises a filter receiver (150) that is rotatable inside the filter head assembly (20) between a filtering position (152) and a bypass position (154);
wherein the filter head assembly (20) further comprises a filter head sleeve (156) that has a cross-section that complements the shape of the engagement protrusion (26) such that the cross-section of the filter head sleeve is substantially egg-shaped;
wherein the filter head sleeve (156), the engagement protrusion (26) and the first and second engagement surfaces (90, 92) are arranged such that, when the filter unit (12) is drawn into the filter head assembly (20), the engagement protrusion (26) is arranged to engage with and to be partially inserted into the filter head sleeve (156) and to subsequently rotate the filter head sleeve (156) and the filter receiver;
wherein the filter head assembly further comprises first and second guides (94, 96) that are respectively complementary to the first and second engagement surfaces (90, 92), wherein the first and second guides (94, 96) are juxtapositioned on an interior wall (99) that defines a receiving cavity (100) of the filter head assembly (20);
wherein the filter head assembly (20) further comprises a key slot (24) that is arranged to receive the laterally extending key member (22), wherein the key slot includes a first segment (85) that is substantially linear and parallel with the longitudinal extent of the filter head assembly (20), a second segment (87) that extends at an angle between 0 degrees and 90 degrees relative to the longitudinal extent of the filter head assembly (20), and a third segment (91) that extends substantially laterally or normal to the longitudinal extent of the filter head assembly (20);
wherein the first and second engagement surfaces (90, 92) each include a first segment (102), second segment (104) and third segment (106) that respectively correspond to the first segment (85), second segment (87) and third segment (91) of the key slot (24);
wherein, relative to the longitudinal extent of the filter head assembly (20), the second segment (104) of the first and second engagement surfaces (90, 92) is at the same general angle as the second segment (87) of the key slot (24); and
wherein the filter receiver (150) further comprises a stop member (151) that is arranged such that the stop member (151) is prevented from rotating past the interference member (88) when the interference member (88) is in the interference position and the stop member (151) is free to rotate past the interference member (88) when the interference member (88) is in the non-interference position.

2. The water filter system according to claim 1, wherein an electronic device (50) having a memory storage unit is disposed on the filter unit (12).

3. The water filter system of claim 2, further comprising: an electronic connector (135) disposed on the filter head assembly (20).

4. The water filter system according to claim 2 or 3, wherein the memory storage unit records water flow data related to usage of the filter unit (12).

5. The water filter system according to any of claims 2 to 4, wherein the electronic device (50) includes a plurality of exposed metallic contacts (54A, 54B, 54C).

6. The water filter system according to any of claims 2 to 5, wherein the electronic device (50) includes a body having a generally triangular-shaped cross section with an apex (52) extending away from the body portion (14) of the filter unit (12).

7. The water filter system according to claims 5 and 6, wherein the exposed metallic contacts (54A, 54B, 54C), in an installed configuration of the filter unit (12) on the filter head assembly (20), abut corresponding metallic contacts of the electronic connector (135).

8. The water filter system according to any of claims 3 to 7, wherein the electronic connector (135) is removably connected to the filter head assembly (20) with a snap-fit connection (134).

9. A method of installing a filter unit (12), as defined in claims 1 to 8, in a filter head assembly (20), as defined in claims 1 to 8, to thereby obtain a water filter system according to any of the preceding claims, the method comprising:
aligning the filter unit (12) into the filter head assembly (20);
aligning the laterally extending key member (22) into the key slot (24) in the filter head assembly (20);
aligning the first and second engagement surfaces (90, 92) on the filter unit (12) into the respectively complementary first and second guides (94, 96) on the filter head assembly (20); and
rotatingly inserting the engagement protrusion (26) into the filter head assembly (20), wherein the laterally extending key member (22) shifts an interference member (88) on the filter head assembly (20) from an interference position, wherein the filter unit (12) cannot sealingly engage the filter head assembly, to a non-interference position, wherein the filter unit (12) can sealingly engage the filter head assembly (20).

10. The method of claim 9, further comprising: abutting an electrical contact (54A, 54B, 54C) on the filter unit (12) with an electrical contact (135) on the filter head assembly (20).

11. The method of claim 9, wherein the step of aligning an engagement surface further comprises: aligning a first recessed engagement surface (90) on the filter unit (12) with a first raised engagement surface (94) on the filter head assembly (20), and aligning a second recessed engagement surface (92) on the filter unit (12) with a second raised engagement surface (96) on the filter head assembly (20).

12. The method of claim 9, wherein the step of inserting the filter unit (12) into the filter head assembly (20) further comprises: rotating the interference member (88) between the interference position and the non-interference position about a living hinge.

13. The method of claim 9, wherein the step of rotatingly inserting the filter unit further comprises disengaging a by-pass channel (157) disposed in the filter head assembly (20).

## Patentansprüche

1. Wasserfiltersystem, umfassend:
eine Filterkopfanordnung (20);
eine Filtereinheit (12), die einen Körperabschnitt (14) hat, der angepasst ist, um drehbar in der Filterkopfanordnung (20) aufgenommen zu werden;
einen Eingriffsvorsprung (26), der sich von dem Körperabschnitt (14) erstreckt und zur Aufnahme in der Filterkopfanordnung (20) angepasst ist, **dadurch gekennzeichnet, dass** der Eingriffsvorsprung (26) eine Umfangswand aufweist, die einen Querschnitt umfasst, der einen Außenumfang mit einem ersten Abschnitt (28), der einen ersten Krümmungsradius hat, und einem zweiten Abschnitt (32), der einen zweiten Krümmungsradius hat, der größer ist als der erste Krümmungsradius, definiert, wobei der Außenumfang bei dem Querschnitt des Eingriffsvorsprungs (26) im Wesentlichen eiförmig ist und eine einzige Symmetrieachse hat; und
eine erste und zweite Eingriffsfläche (90, 92), die mindestens einen Teil des Körperabschnitts (14) und mindestens ein sich seitlich erstreckendes Keilelement (22), das auf dem Körperabschnitt (14) zwischen der ersten Eingriffsfläche (90) und der zweiten Eingriffsfläche (92) angeordnet ist, durchquert, wobei das sich seitlich erstreckende Keilelement (22) angepasst ist, ein Eingriffselement (88) der Filterkopfanordnung (20) von einer Eingriffsstellung, bei der der Körperabschnitt (14) nicht vollständig in die Filterkopfanordnung (20) eingeführt werden kann, in eine Nichteingriffsstellung, bei der der Körperabschnitt (14) vollständig in die Filterkopfanordnung (20) eingeführt werden kann, neu zu positionieren;
wobei das sich seitlich erstreckende Keilelement von einem Einlass (70) des Eingriffsvorsprungs (26) versetzt ist, wobei der Einlass (70) in der Umfangswand positioniert ist;
wobei die Filterkopfanordnung (20) eine Filteraufnahme (150) umfasst, die innerhalb der Filterkopfanordnung (20) zwischen einer Filterstellung (152) und einer Umgehungsstellung (154) drehbar ist;
wobei die Filterkopfanordnung (20) ferner eine Filterkopfhülse (156) umfasst, die einen Querschnitt hat, der die Form des Eingriffsvorsprungs (26) ergänzt, sodass der Querschnitt der Filterkopfhülse im Wesentlichen eiförmig ist;
wobei die Filterkopfhülse (156), der Eingriffsvorsprung (26) und die erste und zweite Eingriffsfläche (90, 92) so angeordnet sind, dass der Eingriffsvorsprung (26), wenn die Filtereinheit (12) in die Filterkopfanordnung (20) gezogen wird, angeordnet ist, in die Filterkopfhülse (156) einzugreifen und teilweise darin eingeführt zu werden und anschließend die Filterkopfhülse (156) und die Filteraufnahme zu drehen;
wobei die Filterkopfanordnung ferner eine erste und zweite Führung (94, 96) umfasst, die jeweils komplementär zu der ersten und zweiten Eingriffsfläche (90, 92) sind, wobei die erste und zweite Führung (94, 96) auf einer Innenwand (99), die einen Aufnahmeraum (100) der Filterkopfanordnung (20) definiert, nebeneinander liegen;
wobei die Filterkopfanordnung (20) ferner eine Keilnut (24) umfasst, die angeordnet ist, um das sich seitlich erstreckende Keilelement (22) aufzunehmen, wobei die Keilnut ein erstes Segment (85), das im Wesentlichen linear und parallel zu der Längserstreckung der Filterkopfanordnung (20) ist, ein zweites Segment (87), das sich in einem Winkel zwischen 0 Grad und 90 Grad in Bezug auf die Längserstreckung der Filterkopfanordnung (20) erstreckt, und ein drittes Segment (91), das sich im Wesentlichen seitlich oder senkrecht zu der Längserstreckung der Filterkopfanordnung (20) erstreckt, umfasst;
wobei die erste und zweite Eingriffsfläche (90, 92) je ein erstes Segment (102), zweites Segment (104) und drittes Segment (106) umfassen, die jeweils dem ersten Segment (85), zweiten Segment (87) und dritten Segment (91) der Keilnut (24) entsprechen;
wobei das zweite Element (104) der ersten und zweiten Eingriffsfläche (90, 92) in Bezug auf die Längserstreckung der Filterkopfanordnung (20) in demselben allgemeinen Winkel liegt wie das zweite Segment (87) der Keilnut (24); und
wobei die Filteraufnahme (150) ferner ein Stoppelement (151) umfasst, das angeordnet ist, sodass das Stoppelement (151) daran gehindert wird, sich über das Eingriffselement (88) hinweg zu drehen, wenn das Eingriffselement (88) in der Eingriffsstellung ist und sich das Stoppelement (151) frei über das Eingriffselement (88) hinweg drehen kann, wenn das Eingriffselement (88) in der Nichteingriffsstellung ist.

2. Wasserfiltersystem nach Anspruch 1, wobei eine elektronische Vorrichtung (50), die eine Speichereinheit hat, auf der Filtereinheit (12) angeordnet ist.

3. Wasserfiltersystem nach Anspruch 2, ferner umfassend: einen elektronischen Verbinder (135), der auf der Filterkopfanordnung (20) angeordnet ist.

4. Wasserfiltersystem nach Anspruch 2 oder 3, wobei die Speichereinheit Wasserflussdaten bezüglich der Verwendung der Filtereinheit (12) aufzeichnet.

5. Wasserfiltersystem nach einem der Ansprüche 2 bis 4, wobei die elektronische Vorrichtung (50) eine Vielzahl von freiliegenden metallischen Kontakten (54A, 54B, 54C) umfasst.

6. Wasserfiltersystem nach einem der Ansprüche 2 bis 5, wobei die elektronische Vorrichtung (50) einen Körper umfasst, der einen im Allgemeinen dreieckigen Querschnitt mit einem Scheitelpunkt (52), der sich von dem Körperabschnitt (14) der Filtereinheit (12) weg erstreckt, hat.

7. Wasserfiltersystem nach den Ansprüchen 5 und 6, wobei die freiliegenden metallischen Kontakte (54A, 54B, 54C) in einer installierten Konfiguration der Filtereinheit (12) auf der Filterkopfanordnung (20) an entsprechenden metallischen Kontakten des elektronischen Verbinders (135) anliegen.

8. Wasserfiltersystem nach einem der Ansprüche 3 bis 7, wobei der elektronische Verbinder (135) mit der Filterkopfvorrichtung (20) entfernbar mit einer Schnappverbindung (134) verbunden ist.

9. Verfahren zum Installieren einer Filtereinheit (12), wie in den Ansprüchen 1 bis 8 definiert, in einer Filterkopfanordnung (20), wie in den Ansprüchen 1 bis 8 definiert, um dadurch ein Wasserfiltersystem nach einem der vorstehenden Ansprüche zu erlangen, wobei das Verfahren Folgendes umfasst:
Ausrichten der Filtereinheit (12) in die Filterkopfanordnung (20);
Ausrichten des sich seitlich erstreckenden Keilelements (22) in die Keilnut (24) in der Filterkopfanordnung (20);
Ausrichten der ersten und zweiten Eingriffsfläche (90, 92) auf der Filtereinheit (12) in die jeweils komplementäre erste und zweite Führung (94, 96) auf der Filterkopfanordnung (20); und
drehbares Einführen des Eingriffsvorsprungs (26) in die Filterkopfanordnung (20), wobei das sich seitlich erstreckende Keilelement (22) ein Eingriffselement (88) der Filterkopfanordnung (20) von einer Eingriffsstellung, wobei die Filtereinheit (12) nicht abdichtend in die Filterkopfanordnung eingreifen kann, in eine Nichteingriffsstellung, wobei die Filtereinheit (12) abdichtend in die Filterkopfanordnung (20) eingreifen kann, verschiebt.

10. Verfahren nach Anspruch 9, ferner umfassend: Anliegen eines elektrischen Kontakts (54A, 54B, 54C) auf der Filtereinheit (12) an einen elektrischen Kontakt (135) auf der Filterkopfanordnung (20).

11. Verfahren nach Anspruch 9, wobei der Schritt des Ausrichtens einer Eingriffsfläche ferner Folgendes umfasst: Ausrichten einer ersten vertieften Eingriffsfläche (90) auf der Filtereinheit (12) mit einer ersten erhöhten Eingriffsfläche (94) auf der Filterkopfanordnung (20) und Ausrichten einer zweiten vertieften Eingriffsfläche (92) auf der Filtereinheit (12) mit einer zweiten erhöhten Eingriffsfläche (96) auf der Filterkopfanordnung (20).

12. Verfahren nach Anspruch 9, wobei der Schritt des Einführens der Filtereinheit (12) in die Filterkopfanordnung (20) ferner Folgendes umfasst: Drehen des Eingriffselements (88) zwischen der Eingriffsstellung und der Nichteingriffsstellung um ein Biegescharnier.

13. Verfahren nach Anspruch 9, wobei der Schritt des drehbaren Einführens der Filtereinheit ferner ein Lösen eines Umgehungskanals (157), der in der Filterkopfanordnung (20) angeordnet ist, umfasst.

## Revendications

1. Système de filtre à eau comprenant :
un ensemble de tête de filtre (20) ;
une unité de filtre (12) ayant une partie de corps (14) adaptée pour être reçue en rotation dans ledit ensemble de tête de filtre (20) ;
une saillie mise en prise (26) s'étendant depuis la partie de corps (14) et adaptée pour une réception dans l'ensemble de tête de filtre (20), **caractérisé en ce que** la saillie de mise en prise (26) présente une paroi périphérique incluant une coupe transversale qui définit un périmètre externe avec une première partie (28) ayant un premier rayon de courbure et une deuxième partie opposée (32) ayant un deuxième rayon de courbure qui est plus grand que le premier rayon de courbure, le périmètre externe au niveau de la coupe transversale de la saillie de mise en prise (26) étant de forme sensiblement ovoïde et ayant un seul axe de symétrie ; et
des première et deuxième surfaces de mise en prise (90, 92) traversant au moins une partie de la partie de corps (14) et au moins un élément de touche en extension latérale (22) disposé sur la partie de corps (14) entre la première surface de mise en prise (90) et la deuxième surface de mise en prise (92), l'élément de touche en extension latérale (22) étant adapté pour repositionner un élément d'interférence (88) de l'ensemble de tête de filtre (20) d'une position d'interférence, par laquelle la partie de corps (14) ne peut pas pas être insérée entièrement dans l'ensemble de tête de filtre (20), à une position de non-interférence, par laquelle la partie de corps (14) peut être insérée entièrement dans l'ensemble de tête de filtre (20) ;
l'élément de touche en extension latérale étant décalé d'une entrée (70) de la saillie de mise en prise (26), l'entrée (70) étant positionnée dans la paroi périphérique ;
l'ensemble de tête de filtre (20) comprenant un récepteur de filtre (150) qui peut tourner à l'intérieur de l'ensemble de tête de filtre (20) entre une positon de filtration (152) et une position de contournement (154) ;
l'ensemble de tête de filtre (20) comprenant en outre un manchon de tête de filtre (156) qui a une coupe transversale qui complète la forme de la saillie de mise en prise (26) de sorte que la coupe transversale du manchon de tête de filtre soit de forme sensiblement ovoïde ;
le manchon de tête de filtre (156), la saillie de mise en prise (26) et les première et deuxième surfaces de mise en prise (90, 92) étant agencés de sorte que, lorsque l'unité de filtre (12) est attirée dans l'ensemble de tête de filtre (20), la saillie de mise en prise (26) soit agencée pour venir en prise avec le manchon de tête de filtre (156) et être partiellement insérée dans celui-ci et pour ensuite faire tourner le manchon de tête de filtre (156) et le récepteur de filtre ;
l'ensemble de tête de filtre comprenant en outre des premier et deuxième guides (94, 96) qui sont respectivement complémentaires des première et deuxième surfaces de mise en prise (90, 92), les premier et deuxième guides (94, 96) étant juxtaposés sur une paroi intérieure (99) qui définit une cavité de réception (100) de l'ensemble de tête de filtre (20) ;
l'ensemble de tête de filtre (20) comprenant en outre un fente de touche (24) qui est agencée pour recevoir l'élément de touche en extension latérale (22), la fente de touche incluant un premier segment (85) qui est sensiblement linéaire et parallèle à l'extension longitudinale de l'ensemble de tête de filtre (20), un deuxième segment (87) qui s'étend selon un angle compris entre 0 degré et 90 degrés par rapport à l'extension longitudinale de l'ensemble de tête de filtre (20), et un troisième segment (91) qui s'étend sensiblement latéralement ou normalement à l'extension longitudinale de l'ensemble de tête de filtre (20) ;
les première et deuxième surfaces de mise en prise (90, 92) chacune incluant un premier segment (102), un deuxième segment (104) et un troisième segment (106) qui correspondent respectivement au premier segment (85), au deuxième segment (87) et au troisième segment (91) de la fente de touche (24) ;
par rapport à l'extension longitudinale de l'ensemble de tête de filtre (20), le deuxième segment (104) des première et deuxième surfaces de mise en prise (90, 92) se trouvant selon le même angle général que le deuxième segment (87) de la fente de touche (24) ; et
le récepteur de filtre (150) comprenant en outre un élément de butée (151) qui est agencé de sorte que l'élément de butée (151) ne puisse pas tourner au-delà de l'élément d'interférence (88) lorsque l'élément d'interférence (88) de trouve dans la position d'interférence et que l'élément de butée (151) soit libre de tourner au-delà de l'élément d'interférence (88) lorsque l'élément d'interférence (88) se trouve dans la position de non-interférence.

2. Système de filtre à eau selon la revendication 1, dans lequel un dispositif électronique (50) ayant une unité de stockage de mémoire est disposé sur l'unité de filtre (12).

3. Système de filtre à eau selon la revendication 2, comprenant en outre : un connecteur électronique (135) disposé sur l'ensemble de tête de filtre (20).

4. Système de filtre à eau selon la revendication 2 ou 3, dans lequel l'unité de stockage de mémoire enregistre des données de débit d'eau liées à l'utilisation de l'unité de filtre (12).

5. Système de filtre à eau selon l'une quelconque des revendications 2 à 4, dans lequel le dispositif électronique (50) inclut une pluralité de contacts métallique exposés (54A, 54B, 54C).

6. Système de filtre à eau selon l'une quelconque des revendications 2 à 5, dans lequel le dispositif électronique (50) inclut un corps ayant une coupe transversale de forme généralement triangulaire avec un sommet (52) s'étendant en éloignement de la partie de corps (14) de l'unité de filtre (12).

7. Système de filtre à eau selon les revendications 5 et 6, dans lequel les contacts métalliques exposés (54A, 54B, 54C), dans une configuration installée de l'unité de filtre (12) sur l'ensemble de tête de filtre (20), butent contre des contacts métalliques correspondants du connecteur électronique (135).

8. Système de filtre à eau selon l'une quelconque des revendications 3 à 7, dans lequel le connecteur électronique (135) est connecté de manière amovible à l'ensemble de tête de filtre (20) avec une connexion à emboîtement (134).

9. Procédé d'installation d'une unité de filtre (12), telle que définie dans les revendications 1 à 8, dans un ensemble de tête de filtre (20), tel que défini dans les revendications 1 à 8, pour ainsi obtenir un système de filtre à eau selon l'une quelconque des revendications précédentes, le procédé comprenant :
l'alignement de l'unité de filtre (12) dans l'ensemble de tête de filtre (20) ;
l'alignement de l'élément de touche en extension latérale (22) dans la fente de touche (24) dans l'ensemble de tête de filtre (20) ;
l'alignement des première et deuxième surfaces de mise en prise (90, 92) sur l'unité de filtre (12) dans les premier et deuxième guides respectivement complémentaires (94, 96) sur l'ensemble de tête de filtre (20) ; et
l'insertion par rotation de la saillie de mise en prise (26) dans l'ensemble de tête de filtre (20), l'élément de touche en extension latérale (22) déplaçant un élément d'interférence (88) sur l'ensemble de tête de filtre (20) d'une position d'interférence, dans laquelle l'unité de filtre (12) ne peut pas mettre en prise étanche l'ensemble de tête de filtre, à une position de non-interférence, dans laquelle l'unité de filtre (12) peut mettre en prise étanche l'ensemble de tête de filtre (20).

10. Procédé selon la revendication 9, comprenant en outre : la mise en butée d'un contact électrique (54A, 54B, 54C) sur l'unité de filtre (12) avec un contact électrique (135) sur l'ensemble de tête de filtre (20).

11. Procédé selon la revendication 9, dans lequel l'étape d'alignement d'une surface de mise en prise comprend en outre : l'alignement d'une première surface de mise en prise en retrait (90) sur l'unité de filtre (12) avec une première surface de mise en prise surélevée (94) sur l'ensemble de tête de filtre (20), et l'alignement d'une deuxième surface de mise en prise en retrait (92) sur l'unité de filtre (12) avec une deuxième surface de mise en prise surélevée (96) sur l'ensemble de tête de filtre (20).

12. Procédé selon la revendication 9, dans lequel l'étape d'insertion de l'unité de filtre (12) dans l'ensemble de tête de filtre (20) comprend en outre : la rotation de l'élément d'interférence (88) entre la position d'interférence et la position de non-interférence autour d'une charnière vive.

13. Procédé selon la revendication 9, dans lequel l'étape d'insertion par rotation de l'unité de filtre comprend en outre le désengagement d'un canal de contournement (157) disposé dans l'ensemble de tête de filtre (20).
